# EUROPÄISCHE PATENTSCHRIFT

(11) **EP 3 434 454 B1**
(45) Veröffentlichungstag und Bekanntmachung des Hinweises auf die Patenterteilung: **01.03.2023**
(21) Anmeldenummer: 17183257.9
(22) Anmeldetag: 26.07.2017
(51) Int. Cl.: B29C 65/34

(54) **ELASTISCHE ELEKTROSCHWEISSVERBINDUNG**
ELASTIC ELECTROWELDING JOINT
UNION ÉLASTIQUE PAR SOUDURE ÉLECTRIQUE

(43) Veröffentlichungstag der Anmeldung: 30.01.2019
(73) Patentinhaber: Georg Fischer Wavin AG, 8201 Schaffhausen (CH)
(72) Erfinder: Mayer, Karl-Heinz, 78224 Singen (DE)
(74) Vertreter: Fenner, Seraina

(56) Entgegenhaltungen:
- EP-A1- 2 902 172
- EP-A2- 0 689 931
- GB-A- 2 343 652
- JP-A- 2001 116 182
- JP-A- 2011 011 468

## Beschreibung

Die Erfindung betrifft einen Elektroschweissfitting insbesondere zum Verbinden oder Anschliessen von Rohrenden aus thermoplastischem Kunststoff enthaltend einen Grundkörper aus thermoplastischem oder anderen schweissbaren Kunststoffen mit einem Elastizitätsmodul E2 und mindestens ein Heizelement vorzugsweise eine Heizdrahtwicklung mit mehreren Windungen zur Erwärmung des Kunststoffs.

Zum Verbinden oder Anschliessen von Rohrleitungsteilen aus thermoplastischen Kunststoffen sind Elektroschweissfittings bekannt. Zum teilweise Aufschmelzen und Verschweissen der zu verbindenden Teile ist in der Wandung des Fittings zum Rohr hin gerichtet, welches zu verschweissen ist, ein Heizelement angeordnet, welches in der Regel als Heizdrahtwicklung ausgebildet ist, welches durch die Zufuhr von elektrischer Energie eine ausreichende Wärmemenge erzeugt.

Um eine gute Schweissverbindung zu erzielen ist es bei herkömmlichen Elektroschweissfittings erforderlich, dass die zu verschweissende Fläche gereinigt bzw. geschält wird um die äussere, gewitterte Oberfläche zu entfernen. Erfolgt keine Schälung des Rohres oder eine unzureichende ist das Bruchverhalten der Schweissverbindung spröde aufgrund der hohen Spannung, die durch den eher unelastischen Kunststoff aufgebaut wird, dies auch weil durch die fehlende oder unzureichende Schälung kein Stoffschluss zwischen dem Material der Schweisszone im Fitting und des Rohres eintritt da ein Stoffschluss nur bei korrekter Schälung erfolgt wo es den Molekülen ermöglicht ist in der Schweisszone des Fittings wie auch im zu verschweissenden Rohr eine stoffschlüssige Verbindung herzustellen die gleichwertig dem Grundmaterial ist.

Die DE 196 28 916 A1 offenbart einen entsprechenden Elektroschweissfitting der als Muffe ausgebildet ist und bei welchem vor dem Verschweissen eine Schälung der Rohre benötigt wird. Wie bereits oben erwähnt, ist der Nachteil dieser Muffe, dass in der Schweissverbindung aufgrund des Kunststoffs hohe Spannungen entstehen können und bei nicht ausreichend geschälten Rohren diese dann zu Sprödbrüchen führen.

Die JP2001116182 offenbart einen Elektroschweißfitting mit einem Körper aus einem Kunststoff und einem Heizelement, das von einem anderen Kunststoff umgeben ist, wobei dieser Kunststoff zumindest in einer Ausführungsform einen Elastizitätsmodul hat, der kleiner ist als 50% des Elastizitätsmoduls des Kunststoffs des Körpers. Die GB2343652, JP2011011468 oder EP2902172 A1 offenbaren einen Elektroschweißfitting mit einem Körper aus einem anderen Kunststoff als dem, der das Heizelement umgibt. Die EP 0 689 931 A2 offenbart die Verwendung eines anderen Kunststoffs zur Umhüllung des Heizelements als den, der für die Herstellung des Elektroschweißkörpers verwendet wird. Diese beiden Kunststoffe haben auch einen unterschiedlichen Elastizitätsmodul von mehr als 50 % zugunsten des Kunststoffs, der den Körper bildet.

Es ist Aufgabe der Erfindung ein Elektroschweissfitting vorzuschlagen, welches ohne eine Schälung des Rohres die Spannung in der Schweisszone reduziert und keinen Sprödbruch bei Belastungen zwischen Rohr und Schweissung erfährt.

Erfindungsgemäß wird diese Aufgabe durch die Merkmale des beigefügten Anspruchs 1 gelöst. Insbesondere dann, wenn das Heizelement, vorzugsweise die Heizdrahtwicklung, ganz oder teilweise von einem Kunststoff umgeben ist, der nicht dem Kunststoff des Grundkörpers entspricht oder ein anderer Kunststoff als der des Grundkörpers ist oder andere Eigenschaften aufweist, mit einem anderen Elastizitätsmodul.

Dies dient der Vermeidung von Sprödbrüchen in der Schweissung zwischen dem Elektroschweissfitting und dem Rohr.

Dadurch wird vermieden, dass ein sprödes Buchverhalten an der Grenzfläche der Rohroberfläche zur Verschmelzung entsteht, welches meist bei ungeschälten Rohren eintritt.

Durch das Anordnen eines anderen Kunststoffs bzw. eines Kunststoffs mit anderen Eigenschaften, mit einem anderen Elastizitätsmodul um das Heizelement vorzugsweise die Heizdrahtwicklung wird der Schweisszone eine gewisse Elastizität beim Auftreten von äusseren Krafteinflüssen ermöglicht. Wie z. B. von auftretenden Biege- oder Zugbelastungen durch Tempertaturveränderungen oder durch Quetschungen ist dies ein grosser Vorteil da durch den elastischen Bereich um das Heizelement bzw. die Heizdrahtwicklung eine hohe Dehnung ermöglicht wird bevor die Bruchspannung erreicht ist und es zum Bruch kommt, da ein solch elastisches Material aufgrund seiner hohen Elastizität nur langsam eine hohe Spannung aufbaut die zum Bruch führt.

Eine erfindungsgemäße Ausführungsform besteht darin, dass der das Heizelement vorzugsweise die Heizdrahtwicklung umgebende Kunststoff ein Elastizitätsmodul E1 aufweist, wobei das Elastizitätsmodul E1 des Heizungselement vorzugsweise des Heizdrahtwicklung umgebenden Kunststoffs kleiner ist als das Elastizitätsmodul E2 des Kunststoffs des Grundkörpers. Dadurch, dass das Elastizitätsmodul E1 kleiner ist als das Elastizitätsmodul E2 des Grundkörpers entsteht eine geringere Spannung in der Schweissung bzw. zur Grenzfläche zum Rohr hin da die Naht aus einem anderen Kunstsoff gebildet ist der nachgiebiger und elastischer ist als der Kunststoff des Grundkörpers und sich dadurch weiter dehnen lässt bis es dann zum Bruch kommt, der ebenfalls im Grenzbereich stattfindet. Dies ist gut erkennbar wenn die Schweissung derart überlastet ist, dass sie einen Bruch erfährt da dieser Bruch dann duktil ausgebildet ist und somit vor dem Versagen der Verbindung zuerst eine wesentliche Verformung erfährt.

Erfindungsgemäß ist es, wenn das Elastizitätsmodul E1 des Heizelement, vorzugsweise desHeizdrahtwicklung umgebenden Kunststoffs kleiner oder gleich 50% des Elastizitätsmoduls E2 des Kunststoffs des Grundkörpers ist. Dadurch wird die Spannung bei denselben Belastungen geringer.

Als Heizelement ist vorzugsweise eine Heizdrahtwicklung zu verwenden, wobei aber auch leitender Kunststoff der als Heizelement eingesetzt werden kann denkbar ist. Auch andere Heizelement die am oder im Fitting anbringbar sind, sind denkbar, wie leitende Bänder, leitende Hülsen usw..

Das Elektroschweissfitting weist einen Grundkörper auf, der vorzugsweise als Muffe, Nippel oder Sattel ausgebildet ist. Wenn der Grundkörper als Muffe ausgebildet ist, dient er der Verbindung zweier Rohrenden indem die Rohrenden in die Muffe eingeschoben werden und der Aussendurchmesser der Rohre am Innendurchmesser der Muffe anliegt und damit verschweisst wird.

Bei einem Nippel als Grundkörper werden die Rohrenden auf den Nippel aufgeschoben bzw. der Innendurchmesser der Rohrenden liegt am Aussendurchmesser des Nippels an und werden dann zusammen verschweisst.

Als weitere Ausführungsmöglichkeit besteht die Ausbildung des Grundkörpers als Sattel. Dieser wird auf ein Rohr aufgesetzt und ermöglicht das Anschliessen eines abgehenden Rohres.

Gemäss einer bevorzugten Ausführungsform ist der Grundkörper aus Polypropylen PP, Polybutylen PB, Polyvinylchlorid PVC, Polyvinylidenfluorid PVDF oder Polyethylen PE hergestellt.

Erfindungsgemäß ist es, wenn der die Heizdrahtwicklung ganz oder teilweise umgebende Kunststoff ein thermoplastisches Elastomer TPE, ein Polyethylen PE, ein Polyethylen Low Density PE-LD, ein Polyethylen-Mix PE-Mix oder ein Polyethylen geschäumt PE geschäumt ist. Diese Kunststoffe weisen ein Elastizitätsmodul E1 auf das unter dem des Elastizitätsmoduls E2 liegt, vorzugsweise gleich oder kleiner als 50% des Elastizitätsmoduls E2 des Grundkörpers.

Eine weitere Ausgestaltung der Erfindung besteht darin, dass die Heizdrahtwicklung in einem Hohlzylinder aus Kunststoff mit dem Elastizitätsmodul E1 angeordnet ist bzw. in dessen Wandung. Der Hohlzylinder ist an dem Umfang des Grundkörpers angeordnet der mit dem Rohr in Kontakt steht, das heisst bei einer Muffe am Innenumfang, bei einem Nippel am Aussenumfang und bei einem Sattel am Innenumfang des Sattelstücks.

Als weitere Ausgestaltungsmöglichkeit kann der Draht der Heizdrahtwicklung mit Kunststoff mit dem Elastizitätsmodul E1 ummantelt und dieser dann in den Grundkörper eingelegt sein.

Vorteilhaft ist es auch wenn nicht alle Windungen der Heizdrahtwicklung mit dem Kunststoff mit dem Elastizitätsmodul E1 umgeben sind, das heisst, dass nur ein paar der Windungen der Heizdrahtwicklung mit dem Kunststoff mit dem Elastizitätsmodul E1 umgeben sind und die anderen mit dem Kunststoff des Grundkörpers mit dem Elastizitätsmodul E2 umgeben sind. Dies bringt neben dem Vorteil der Elastizität in der Schweissung auch den Vorteil im Bereich des Kunststoffs mit dem Elastizitätsmodul E2, dass eine hohe axiale Zugkraft aufgenommen werden kann.

Ausführungsbeispiele der Erfindung werden anhand der Figuren beschrieben, wobei sich die Erfindung nicht nur auf diese Ausführungsbeispiele beschränkt. Es zeigen:
- Fig. 1: einen Längsschnitt durch ein Elektroschweissfitting das als Muffe ausgebildet ist mit einer Heizdrahtwicklung die von einem Kunststoffhohlzylinder umfasst ist,
- Fig. 2: einen Längsschnitt durch ein Elektroschweissfitting das als Muffe ausgebildet ist mit einer Heizdrahtwicklung die teilweise von einem Kunststoffhohlzylinder umfasst ist,
- Fig. 3: einen Längsschnitt durch ein Elektroschweissfitting das als Muffe ausgebildet ist mit einer Heizdrahtwicklung bei der der Draht mit einem anderen Kunststoff ummantelt ist,
- Fig. 4: einen Längsschnitt durch ein Elektroschweissfitting das als Muffe ausgebildet ist mit einer Heizdrahtwicklung, die zwischen den Windungen mit anderem Kunststoff Windungen ohne anderen Kunststoff aufweist,
- Fig. 5: einen Längsschnitt durch ein Elektroschweissfitting das als Nippel ausgebildet ist mit einer Heizdrahtwicklung die von einem Kunststoffhohlzylinder umfasst ist,
- Fig. 6: einen Längsschnitt durch ein Elektroschweissfitting das als Sattel ausgebildet ist mit einer Heizdrahtwicklung die von einem Kunststoffhohlzylinder umfasst ist und
- Fig. 7: zeigt ein Spannung-Dehnungs-Diagramm in Bezug auf das Elastizitätsmodul der in der Schweisszone verwendeten Kunststoffe.

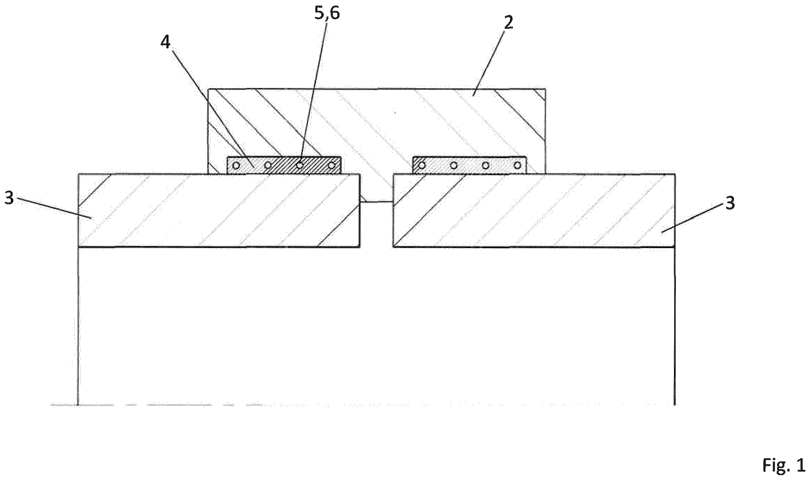

Die in Fig. 1 dargestellte Zeichnung zeigt ein Elektroschweissfitting 1 das als Grundkörper 2 eine Muffe aufweist. Die Muffe weist an ihrem Innenumfang eine Heizdrahtwicklung 5 auf, die der Erwärmung des Kunststoffs und somit der Verschweissung des Grundkörpers 2 mit den Rohrenden 3 dient. Die Heizdrahtwicklung 5 ist von einem anderen Kunststoff 4 umgeben als wie der Grundkörper 2 ausgebildet ist bzw. von einem Kunststoff der andere Eigenschaften aufweist als der des Grundkörpers 2. Der Kunststoff 4 um die Heizdrahtwicklung 5 weist ein geringeres Elastizitätsmodul E1 auf als das des Grundkörpers 2. In der in Fig. 1 dargestellten Ausführungsform ist die Heizdrahtwicklung 5 in einem eine Art aus anderem Kunststoff 4 gebildeten Hohlzylinder angeordnet bzw. in dessen Wandung. Dadurch erwärmt sich einerseits der elastischere Kunststoff 4 der die Heizdrahtwicklung umgibt sowie auch der Kunststoff der Rohre was die Verschweissung dann ermöglicht. Der Einsatz des elastischeren Kunststoffs 4 verringert die auftretende Spannung in der Schweissung bzw. in der Grenzfläche zum Rohr und somit führt es zwischen der Schweissnaht und dem verschweissten Rohr nicht zu einem Sprödbruch bei einem Versagen der Schweissung. Durch den elastischeren Kunststoff 4 in der Schweisszone kann beim Auftreten von äusseren Einflüssen dieser Kunststoff 4 besser nachgeben bzw. dehnt sich mehr und baut dadurch weniger schnell eine hohe Spannung auf bzw. erreicht weniger schnell die die Bruchspannung wo das Material versagt.

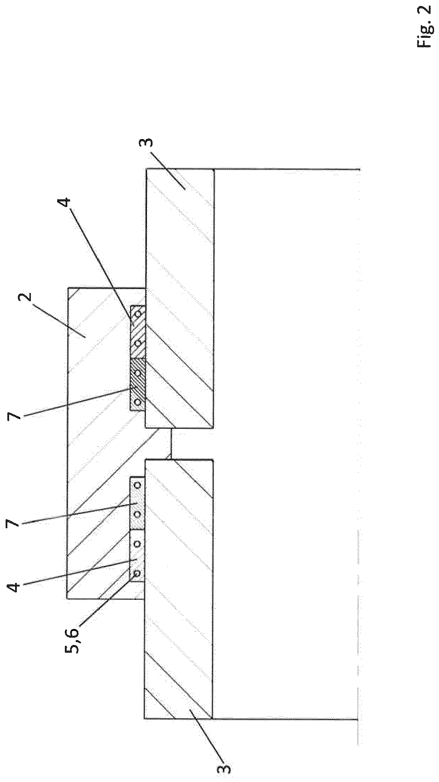

Die abgebildete Ausführungsform des Elektroschweissfittings 1 in Fig. 2 zeigt die Heizdrahtwicklung 5 die nur teilweise von dem elastischeren bzw. anderen Kunststoff 4 umgeben ist bzw. nur ein paar der Windungen 6 davon umgeben sind und die anderen Windungen 6 vom Kunststoff 7 des Grundkörpers 2 umgeben sind. Dies hat einerseits den Vorteil, dass der elastischere Bereich mit dem Kunststoff 4 mit dem geringeren Elastizitätsmodul E1 geringere Spannungen erfährt und der andere Bereich der Heizdrahtwicklung 5, welcher von dem Kunststoff 7 des Grundkörpers 2 umgeben ist, vorteilhaft für hohe axiale Zugkräfte ist.

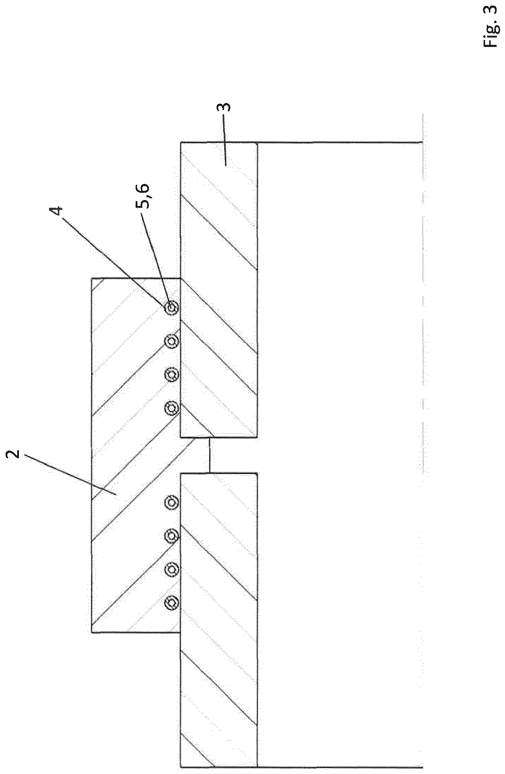

In Fig. 3 ist eine weitere alternative Anordnung des elastischeren Kunststoffs mit dem Elastizitätsmodul E1 aufgezeigt in der der elastischere Kunststoff 4 um den Wicklungsdraht der Heizdrahtwicklung 5 angeordnet ist bzw. der Draht mit dem Kunststoff beschichtet ist und dieser dann im Grundkörper 2 angeordnet ist der wie in Fig. 3 als Muffe ausgebildet ist aber auch als Nippel oder Sattel ausgebildet sein kann.

Alle aufgezeigten Anordnungsmöglichkeiten und Ausgestaltungsformen sind für alle Grundkörper 2 anwendbar, sei es Muffe, Nippel oder auch Sattel.

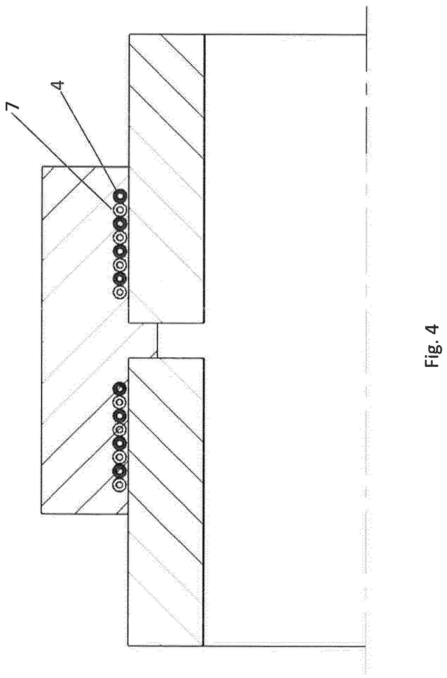

Fig. 4 zeigt die Möglichkeit der Ausgestaltung bei der zwischen den einzelnen Windungen 6 der Heizdrahtwicklung 5 die mit einem anderen Kunststoff 4 umgeben ist eine weitere Wicklung angeordnet ist, die dann direkt mit dem Kunststoff 7 des Grundkörpers 2 umgeben ist.

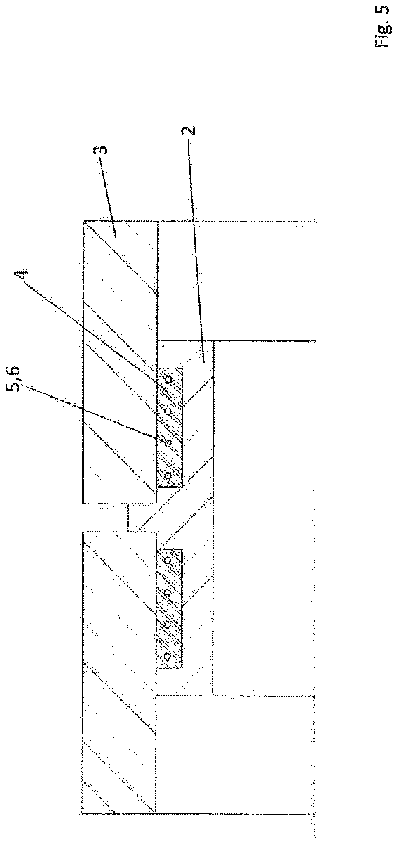

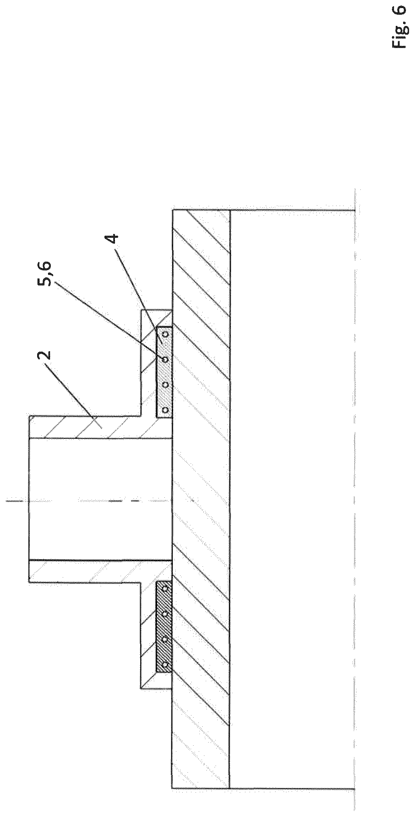

Fig. 5 zeigt, die wie in Fig. 1 dargestellte Möglichkeit der Anordnung der Heizdrahtwicklung 5 in einem Hohlzylinder aus dem elastischen Kunststoff 4 mit dem Elastizitätsmodul E1 an einem Nippel als Grundkörper 2. Analog ist in Fig. 6 ein Sattel dargestellt der ebenfalls diese Anordnung der Heizdrahtwicklung 5 aufweist.

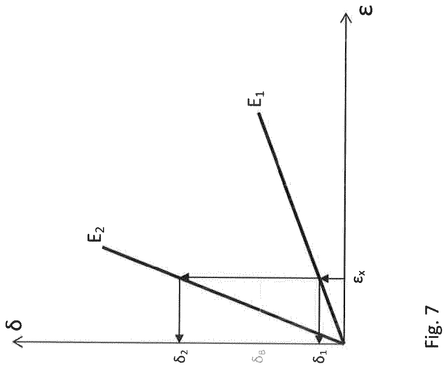

Fig. 7 zeigt das Spannungs-Dehnungs-Diagramm mit Bezug auf das Elastizitätsmodul der Verschweissung mit den unterschiedlichen Kunststoffen 4, 7. E1 zeigt das Elastizitätsmodul des anderen Kunststoffs 4 als der Grundkörper ausgebildet ist der vorzugsweise elastischer ausgebildet ist. E2 zeigt das Elastizitätsmodul des Kunststoffs 7 des Grundkörpers 2. εₓ ist die aufgebrachte Dehnung aufgrund äusserer Belastungen, sei es durch Quetschungen oder sonst aufgebrachter Kräfte die wirken. Es ist klar zu erkennen, dass beim Einsatz des elastischeren Kunststoffs 4 mit dem Elastizitätsmodul E1 in der Schweisszone die Spannungskurve tiefer verläuft im Vergleich zu einer Verschweissung mit dem Kunststoff 7 des Grundkörpers 2 mit dem höheren Elastizitätsmodul E2 in der Schweisszone, das als Stand der Technik gilt. Die höhere Elastizität des Kunststoffs 4 mit dem geringeren Elastizitätsmodul E1 baut bei auftretenden Kräften weniger Spannung auf, das heisst um die Bruchspannung zu erreichen bedingt es einer wesentlich höheren Dehnung bis dann der Bruch eintritt.

### Bezugszeichenliste

1 Elektroschweissfitting
2 Grundkörper
3 Rohrende
4 Anderer Kunststoff als Grundkörper (mit Elastizitätsmodul E1)
5 Heizdrahtwicklung
6 Windung
7 Gleicher Kunststoff wie Grundkörper
δ Spannung [N/mm²]
δ₁ Spannung in der Grenzfläche der Schweisszone mit anderem Kunststoffs als der des Grundkörpers [N/mm²]
δ₂ Spannung in der Grenzfläche der Schweisszone mit gleichem Kunststoffs wie der des Grundkörpers [N/mm²]
δ_{B} Bruchspannung [N/mm²]
E1 Elastizitätsmodul des Heizdrahtwicklung umgebenden Kunststoffs (anderer Kunststoff als Grundkörper)
E2 Elastizitätsmodul des Grundkörper Kunststoffs
ε Dehnung [%]
εₓ aufgebrachte Dehnung aufgrund äusserer Belastungen

## Patentansprüche

1. Elektroschweissfitting (1) insbesondere zum Verbinden oder Anschliessen von Rohrenden (3) aus thermoplastischem Kunststoff enthaltend einen Grundkörper (2) aus thermoplastischem oder anderen schweissbaren Kunststoffen (7) mit einem Elastizitätsmodul E2 und mindestens ein Heizelement vorzugsweise eine Heizdrahtwicklung (5) mit mehreren Windungen (6) zur Erwärmung des Kunststoffs, wobei das Heizelement vorzugsweise die Heizdrahtwicklung (5) ganz oder teilweise von einem Kunststoff (4) umgeben ist der nicht dem Kunststoff (7) des Grundkörpers (2) entspricht bzw. ein anderer Kunststoff (4) ist wie der des Grundkörpers (2) bzw. andere Eigenschaften insbesondere ein anderes Elastizitätsmodul aufweist, wobei das Elastizitätsmodul E1 des Heizelement vorzugsweise Heizdrahtwicklung umgebenden Kunststoffs (4) kleiner oder gleich 50% des Elastizitätsmoduls E2 des Kunststoffs (7) des Grundkörpers (2) ist, **dadurch gekennzeichnet dass**, der das Heizelement vorzugsweise die Heizdrahtwicklung (5) ganz oder teilweise umgebende Kunststoff (4) ein TPE, PE, PE-LD, PE-Mix oder PE geschäumt ist.

2. Elektroschweissfitting (1) nach Anspruch 1, **dadurch gekennzeichnet, dass** das der Grundkörper (2) als Muffe, Nippel oder Sattel ausgebildet ist.

3. Elektroschweissfitting (1) nach einem der Ansprüche 1 bis 2, **dadurch gekennzeichnet, dass** der Grundkörper (2) aus PP, PB, PVC, PVDF oder PE hergestellt ist.

4. Elektroschweissfitting (1) nach einem der Ansprüche 1 bis 3, **dadurch gekennzeichnet, dass** das Heizelement vorzugsweise die Heizdrahtwicklung (5) in einem Hohlzylinder bzw. in dessen Wandung aus Kunststoff (4) mit dem Elastizitätsmodul E1 angeordnet ist.

5. Elektroschweissfitting (1) nach einem der Ansprüche 1 bis 4, **dadurch gekennzeichnet, dass** der Draht der Heizdrahtwicklung (5) mit Kunststoff (4) mit dem Elastizitätsmodul E1 ummantelt ist.

6. Elektroschweissfitting (1) nach einem der Ansprüche 1 bis 5, **dadurch gekennzeichnet, dass** nicht alle Windungen (6) der Heizdrahtwicklung (5) vom Kunststoff (4) mit dem Elastizitätsmodul E1 umgeben sind.

## Claims

1. Electro-welding fitting (1), in particular for connecting or hooking-up pipe ends (3) from thermoplastic plastics material, containing a main body (2) from thermoplastic or other welding-capable plastics materials (7) having an elasticity modulus E2 and at least one heating element, preferably a heating wire coil (5) having a plurality of windings (6) for heating the plastics material, wherein the heating element, preferably the heating wire coil (5), is entirely or partially surrounded by a plastics material (4) that does not correspond to the plastics material (7) of the main body (2), or is a plastics material (4) different from that of the main body (2), respectively, or has other properties, in particular another elasticity modulus, respectively, wherein the elasticity modulus E1 of the plastics material (4) that surrounds the heating element, preferably the heating wire coil, is smaller than or equal to 50% of the elasticity modulus E2 of the plastics material (7) of the main body (2), **characterized in that** the plastics material (4) that entirely or partially surrounds the heating element, preferably the heating wire coil (5), is a TPE, PE, LDPE, a mixed PE or a foamed PE.

2. Electro-welding fitting (1) according to Claim 1, **characterized in that** the main body (2) is configured as a sleeve, union or saddle.

3. Electro-welding fitting (1) according to one of Claims 1 to 2, **characterized in that** the main body (2) is produced from PP, PB, PVC, PVDF, or PE.

4. Electro-welding fitting (1) according to one of Claims 1 to 3, **characterized in that** the heating element, preferably the heating wire coil (5), is disposed in a hollow cylinder, or in the wall of the latter, respectively, from plastics material (4) having the elasticity modulus E1.

5. Electro-welding fitting (1) according to one of Claims 1 to 4, **characterized in that** the wire of the heating wire coil (5) is sheathed with plastics material (4) having the elasticity modulus E1.

6. Electro-welding fitting (1) according to one of Claims 1 to 5, **characterized in that** not all windings (6) of the heating wire coil (5) are surrounded by the plastics material (4) having the elasticity modulus E1.

## Revendications

1. Raccord électrosoudé (1), notamment pour relier ou raccorder des extrémités de tubes (3) en matière thermoplastique, comprenant un corps de base (2) en matières thermoplastiques ou autres matières plastiques soudables (7) ayant un module d'élasticité E2 et au moins un élément chauffant, de préférence un enroulement de fil chauffant (5) avec plusieurs spires (6) pour chauffer la matière plastique, l'élément chauffant, de préférence l'enroulement de fil chauffant (5) étant entièrement ou partiellement entouré d'une matière plastique (4) qui ne correspond pas à la matière plastique (7) du corps de base (2) ou qui est une autre matière plastique (4) que celle du corps de base (2) ou qui présente d'autres propriétés, notamment un autre module d'élasticité, le module d'élasticité E1 de la matière plastique (4) entourant l'élément chauffant, de préférence l'enroulement de fil chauffant, étant inférieur ou égal à 50 % du module d'élasticité E2 de la matière plastique (7) du corps de base (2), **caractérisé en ce que** la matière plastique (4) entourant entièrement ou partiellement l'élément chauffant, de préférence l'enroulement de fil chauffant (5) est un TPE, PE, PE-LD, mélange de PE ou PE moussé.

2. Raccord électrosoudé (1) selon la revendication 1, **caractérisé en ce que** le corps de base (2) est réalisé sous forme de manchon, de mamelon ou de selle.

3. Raccord électrosoudé (1) selon l'une quelconque des revendications 1 à 2, **caractérisé en ce que** le corps de base (2) est fabriqué en PP, PB, PVC, PVDF ou PE.

4. Raccord électrosoudé (1) selon l'une quelconque des revendications 1 à 3, **caractérisé en ce que** l'élément chauffant, de préférence l'enroulement de fil chauffant (5), est agencé dans un cylindre creux ou dans sa paroi en matière plastique (4) ayant le module d'élasticité E1.

5. Raccord électrosoudé (1) selon l'une quelconque des revendications 1 à 4, **caractérisé en ce que** le fil de l'enroulement de fil chauffant (5) est enrobé de matière plastique (4) ayant le module d'élasticité E1.

6. Raccord électrosoudé (1) selon l'une quelconque des revendications 1 à 5, **caractérisé en ce que** toutes les spires (6) de l'enroulement de fil chauffant (5) ne sont pas entourées par la matière plastique (4) ayant le module d'élasticité E1.
